# EUROPÄISCHE PATENTSCHRIFT

(11) **EP 2 025 567 B1**
(45) Veröffentlichungstag und Bekanntmachung des Hinweises auf die Patenterteilung: **26.09.2012**
(21) Anmeldenummer: 08160776.4
(22) Anmeldetag: 18.07.2008
(51) Int. Cl.: B60R 25/02

(54) **Verriegelungsvorrichtung mit Arretierungsteil**
Locking device with a blocking element
Dispositif de verrouillage avec un élément de blocage

(30) Priorität: 20.07.2007 DE 102007034481
(43) Veröffentlichungstag der Anmeldung: 18.02.2009
(73) Patentinhaber: Huf Hülsbeck & Fürst GmbH & Co. KG, 42551 Velbert (DE); Nissan Motor Co., Ltd., Kanagawa 220-8623 (JP)
(72) Erfinder: Trischberger, Werner, 85229, Markt Indersdorf (DE); Hayashi, Kenjirou, Sagamihara-city Kanagawa 228-0807 (JP); Watanuki, Yoshio, Ebina-shi Kanagawa (JP)
(74) Vertreter: Vogel, Andreas

(56) Entgegenhaltungen:
- EP-A1- 1 167 135
- DE-A1- 10 356 660

## Beschreibung

Die vorliegende Erfindung betrifft eine Verriegelungsvorrichtung zum Verriegeln und/oder Entriegeln eines funktionswesentlichen Bauteils, insbesondere einer Lenksäule oder eines Gangschalthebels oder dergleichen, eines Fahrzeuges gemäß des Oberbegriffs von Anspruch 1. Derartige Verriegelungsvorrichtungen dienen zur Sicherung des Fahrzeuges gegen Diebstahl, in dem sie das funktionswesentliche Bauteil im gesicherten Zustand mittels eines beweglichen Sperrglieds form- und/oder kraftschlüssig verriegeln. Hierdurch findet eine Sicherung des Fahrzeuges gegen Diebstahl und/oder unberechtigtes Benutzen statt. Das Sperrglied selber kann direkt oder indirekt über eine Mechanik, einen Motor oder einen Magneten angetrieben bzw. angesteuert werden. Dabei ist die vorliegende Erfindung nicht auf einen besonderen Antrieb des Sperrgliedes gerichtet.

Aus dem Stand der Technik ist die Patentschrift EP 1 182 104 B1 bekannt, bei der eine Verriegelungsvorrichtung offenbart wird, in der das Sperrglied über einen zusätzlichen Sicherungsbolzen gesichert werden kann, falls das Gehäuse der Verriegelungsvorrichtung gewaltsam geöffnet wird. Dabei wird der Sicherungsbolzen mittels einer Federkraft in eine Ausnehmung des Sperrgliedes geschoben, um das Sperrglied formschlüssig zu arretieren. Der Sicherungsbolzen ist in dieser Stellung nicht weiter gesichert, so dass durch seitliche, ruckartige Schläge auf die Verriegelungsvorrichtung die formschlüssige Sicherung des Sperrgliedes überwunden werden kann. Insgesamt weist die bekannte Verriegelungsvorrichtung einen komplexen und teuren Aufbau auf. Das Dokument DE-A-10356660 offenbart ebenfalls eine Verriegelungsvorrichtung, die als nächsliegender Stand der Technik angesehen wird. Diese Vorrichtung hat Funktionalitätseinschränkungen.

Es ist daher Aufgabe der vorliegenden Erfindung, eine Verriegelungsvorrichtung zum Verriegeln und/oder Entriegeln eines funktionswesentlichen Bauteils eines Fahrzeuges zu schaffen, die besonders vielseitig und sicher, insbesondere gegen Aufbruchversuche, ausgestaltet ist.

Zur Lösung dieser Aufgabe wird eine Vorrichtung mit den technischen Merkmalen des Anspruches 1 vorgeschlagen, denen nachfolgende besondere Bedeutung zukommt.

Bei der vorliegenden Verriegelungsvorrichtung wird das vorhandene Sperrglied über ein Arretierungsteil arretiert, falls die Verriegelungsvorrichtung unberechtigt oder gewaltsam geöffnet wird. Darunter ist zu verstehen, dass durch unberechtigte Dritte von außen versucht wird, in die Verriegelungsvorrichtung bzw. in das Gehäuseinnere zu gelangen, um somit eine Manipulation und eine Entriegelung des Sperrglieds herbeizuführen. Das genannte Sperrglied der Verriegelungsvorrichtung kann selber zumindest zwei Positionen einnehmen, nämlich eine Verriegelungsposition, in der das Sperrglied durch eine Öffnung aus dem Gehäuse der Verriegelungsvorrichtung herausragt und in einer Wirkverbindung mit dem funktionswesentlichen Bauteil steht, und eine Entriegelungsposition, in der das erwähnte Sperrglied in keiner Wirkverbindung mit dem funktionswesentlichen Bauteil steht, so dass es funktionsgemäß genutzt werden kann. So verriegelt zum Beispiel das Sperrglied eine Lenksäule oder einen Gangschalthebel oder dergleichen, die als funktionswesentliche Bauteile im Fahrzeug dienen, um eine Benutzung oder einen Diebstahl des Fahrzeuges zu verhindern. In der Entriegelungsposition des Sperrgliedes ist dagegen beispielsweise die Lenksäule frei verwendbar, so dass das Fahrzeug fahrbereit ist. Wird nun von außen durch unberechtigte Dritte versucht, die Verriegelungsvorrichtung zu öffnen, so findet nur in diesem Fall eine endgültige Arretierung des Sperrgliedes in seiner Verriegelungsposition statt. Hierzu nimmt das Arretierungsteil seine Arretierungsstellung ein. Erfindungsgemäß wird das Arretierungsteil in der Arretierungsstellung formschlüssig gehalten, so dass äußere (Kraft-/) Einwirkungen auf die Verriegelungsvorrichtung nicht ausreichen, um den Formschluss des Arretierungsteils aufzuheben. Durch diese Maßnahme können äußere Einflüsse (wie z. B. durch Schläge und/oder Ruckeln) die sichernde Wirkung der Verriegelungsvorrichtung nicht überwinden, so dass das funktionswesentliche Bauteil unbenutzbar verriegelt bleibt. Das Arretierungsteil kann selbst direkt oder indirekt formschlüssig in der Arretierungsstellung gehalten werden. Sofern es indirekt in der Arretierungsstellung gehalten wird, kommt ein zusätzliches Bauteil oder Bauelement zum Einsatz, wodurch der Formschluss bewirkt wird.

Zweckmäßige Ausgestaltungen der erfindungsgemäßen Verriegelungsvorrichtung sind in den abhängigen Unteransprüchen aufgeführt.

Bei einer besonderen Ausbildung der erfindungsgemäßen Vorrichtung ist es vorgesehen, dass das Arretierungsteil direkt mit dem Sperrglied mechanisch zusammenwirkt. Folglich wird das Sperrglied in der Verriegelungsposition direkt vom Arretierungsteil unverschiebbar gehalten. Ebenfalls ist es denkbar, dass das Arretierungsteil das Sperrglied indirekt, insbesondere über ein Steuerelement, welches das Sperrglied betätigt, gehalten ist. Damit wirkt das Arretierungsteil nicht direkt sondern indirekt über ein zusätzliches Element, insbesondere durch das Steuerelement, auf das Sperrglied. Bei beiden Ausführungsformen, dass heißt der direkten und indirekten Sicherung des Sperrgliedes, kann das Arretierungsteil mit seinem Gegenteil einen Formschluss und/oder bevorzugt einen Kraftschluss eingehen, um das Sperrglied in der Verriegelungsposition zu arretieren. Hierzu nimmt das Arretierungsteil selber seine Arretierungsstellung ein.

Bei einer weiteren zweckmäßigen Ausgestaltung der Erfindung ist es vorgesehen, dass das Arretierungsteil gekapselt im Gehäuse der Verriegelungsvorrichtung untergebracht ist, so dass das Arretierungsteil nicht mehr von außen aus der Arretierungsstellung bewegt werden kann. Vielmehr muss die Verriegelungsvorrichtung vollständig zerstört werden, um nach einem gewaltsamen Öffnen der Verriegelungsvorrichtung die Verriegelungsposition des Sperrgliedes und damit das Freigeben des funktionswesentlichen Bauteils zu bewirken. Um das Arretierungsteil in dem Gehäuse gekapselt unterzubringen, kann ein zusätzliches Lagerelement vorgesehen sein, in dem das Arretierungsteil verschieblich gehalten ist. Somit ist quasi das Arretierungsteil in einem gesonderten inneren Gehäuse innerhalb der Verriegelungsvorrichtung angeordnet, wobei das Lagerelement ein Teil des inneren Gehäuses darstellen kann. Dabei ist es ebenfalls denkbar, dass zumindest ein Teil oder eine Seite des Lagerelementes einstückig zum Gehäuse der Verriegelungsvorrichtung ausgestaltet ist. Um eine hohe Einbruchssicherheit zu gewährleisten, kann das Arretierungsteil sowie das Lagerelement und das Gehäuse der Verriegelungsvorrichtung aus einer Leichtmetall- oder Druckgusslegierung, insbesondere einer Aluminium-Druckgusslegierung, bestehen. Da bei einem Einbruchsversuch nicht direkt die Kräfte auf das Arretierungsteil wirken, sondern vielmehr auf das verriegelte funktionswesentliche Bauteil und auf das Sperrglied, kann das Arretierungsteil selber auch z. B. aus einem Kunststoffspritzgussteil und/oder einem glasfaserverstärkten Kunststoffteil bestehen.

Bei einem besonderen Ausführungsbeispiel der erfindungsgemäßen Verriegelungsvorrichtung weist die Verriegelungsvorrichtung zumindest ein von außen teilweise zugängliches Bauelement, insbesondere in Form eines Schließzylinders, eines Gehäusedeckels, einer Gehäusehälfte oder eines Anschlusskontaktes auf. Dieses von außen zugängliche Bauelement verhindert den ungewollten bzw. unberechtigten Eingriff in das Gehäuseinnere der Verriegelungsvorrichtung, wodurch Manipulationen erfolgreich verhindert werden. Ein unberechtigtes Öffnen der Verriegelungsvorrichtung durch ein Entfernen des von außen zugänglichen Bauelementes, führt erfindungsgemäß dazu, dass das Arretierungsteil seine Arretierungsstellung einnimmt, wodurch das Sperrglied in der Verriegelungsposition gehalten wird. Das zuvor erwähnte, zugängliche Bauelement dient in der Regel dazu, das Gehäuse der Verriegelungsvorrichtung gegen äußere Einflüsse abzuschotten bzw. einen definierten Zugang zu der Verriegelungsvorrichtung, wie z. B. durch einen Schlüssel oder einen elektrischen Anschluss, zu gewähren.

Die Verriegelungsvorrichtung ist derart aufgebaut, dass eine Demontage des Gehäuses von dem funktionswesentlichen Bauteils oder eine Entfernung des von außen zugänglichen Bauteils nur dann möglich ist, wenn das Sperrglied in der Entriegelungsposition verweilt. In dieser Entriegelungsposition kann auch das Gehäuse durch Abnahme oder Entfernung des von außen zugänglichen Bauelementes geöffnet werden, ohne dass das Arretierungsteil in seine Arretierungsstellung überführt wird. In diesem Fall wird das Arretierungsteil in einer Freigabestellung durch das Sperrglied oder über das Steuerelement gehalten. Auch das Verschließen des Gehäuses der Verriegelungsvorrichtung durch das von außen zugängliche Bauelement ist nur in der Entriegelungsposition des Sperrglieds möglich.

Bei dem zuvor genannten Ausführungsbeispiel kann zusätzlich ein Sicherungsteil vorgesehen sein, welches zwischen dem von außen zugänglichen Bauelement und dem Arretierungsteil vorgesehen ist und mit diesem mechanisch zusammenwirkt, wobei das zugängliche Bauelement das Sicherungsteil in einer Ruhelage hält, sofern das zugängliche Bauelement das Gehäuseinnere verschließt und das Sicherungsteil in der Ruhelage das Arretierungsteil in einer Freigabestellung hält, in der das Sperrglied im Gehäuse bewegbar angeordnet ist. Ein unberechtigtes Entfernen des von außen zugänglichen Bauelements führt dazu, dass das Sicherungsteil aus der Ruhelage in eine Entsicherungslage überführt wird, wodurch das Arretierungsteil aus der Freigabestellung in die Arretierungsstellung wechselt, worauf das Sperrglied endgültig in der Verriegelungsposition arretiert wird. Das erwähnte Sicherungsteil kann beispielsweise mit dem von außen zugänglichen Bauelement verschraubt sein. Ebenfalls ist es denkbar, dass das Sicherungsteil über eine Nietverbindung oder Schweißverbindung unlösbar mit dem zugänglichen Bauelement verbunden ist. Auch kann das Sicherungsteil über eine Klemmverbindung mit dem zugänglichen Bauelement verbunden sein. Das Sicherungsteil weist an einem Ende einen Befestigungsbereich auf, mit dem es mit dem von außen zugänglichen Bauelement verbunden ist. Am gegenüberliegenden Ende des Befestigungsbereiches ist ein Funktionsbereich des Sicherungsteils angeordnet. Dieser Funktionsbereich steht in Wirkverbindung mit dem Arretierungsteil. In einer denkbaren Ausgestaltung der Erfindung hält das Sicherungsteil in seiner Ruhelage das Arretierungsteil mit dem Funktionsbereich formschlüssig in der Freigabestellung. Durch die unsachgemäße Entfernung des von außen zugänglichen Bauelements wird das Sicherungsteil, insbesondere mit dem Funktionsbereich, von dem Arretierungsteil entfernt, wodurch der Formschluss zwischen dem Sicherungsteil und dem Arretierungsteil aufgehoben wird. Durch das unsachgemäße Öffnen des Gehäuses der Verriegelungsvorrichtung bzw. des Entfernen des von außen zugänglichen Bauelements wechselt das Sicherungsteil von seiner Ruhelage in die Entsicherungslage, wodurch das Arretierungsteil in seine Arretierungsstellung überführt wird. Das entsprechende Sicherungsteil kann als ein Blechteil, insbesondere als ein Blechstanzteil, ausgestaltet sein. Ebenfalls ist es denkbar, dass das Sicherungsteil überwiegend aus einem Sicherheitsdraht besteht, der eine feste Spitze für den Funktionsbereich aufweist, um somit das Arretierungsteil formschlüssig in der Freigabestellung halten zu können. Ebenfalls ist es denkbar, dass das Arretierungsteil durch das Sicherungsteil kraft-und/oder formschlüssig in der Freigabestellung gehalten ist. Bei einer kraftschlüssigen Halterung des Arretierungsteils kann zum Beispiel das Sicherungsteil das Arretierungsteil einklemmen. Wie zuvor bereits beschrieben worden ist, ist es zweckmäßig, dass das Arretierungsteil gekapselt innerhalb des Gehäuses der Verriegelungsvorrichtung angeordnet ist, um somit das Arretierungsteil frei von äußeren Einflüssen zu halten. Nur das Sicherungsteil ragt dabei in der Ruhelage durch die Kapselung, wofür ein Durchbruch, z. B. in Form eines Schlitzes, Spaltes oder einer Bohrung, für das Sicherungsteil vorgesehen sein kann. Nachdem das Arretierungsteil in seine Arretierungsstellung überführt worden ist, ist es zweckmäßig, dass durch den zuvor erwähnten Durchbruch ein Zugang zum Arretierungsteil vermieden wird. Zu diesem Zweck wird das Arretierungsteil in der Arretierungsstellung entfernt vom Durchbruch gehalten.

Bei einer zweckmäßigen Ausgestaltung der erfindungsgemäßen Verriegelungsvorrichtung ist es vorgesehen, dass auf Arretierungsteil eine Federkraft wirkt, die von einem Federelement stammt, wodurch ein selbstständiger Wechsel von der Freigabestellung in die Arretierungsstellung für das Arretierungsteil erfolgt, falls das Gehäuse unberechtigt geöffnet wird. Dabei dient die Federkraft zum Verschieben des Arretierungsteils aus der Freigabestellung in die Arretierungsstellung. Hierfür kann z. B. eine Spiralfeder oder eine Schenkelfeder verwendet werden.

Sofern die zuletzt genannte Schenkelfeder zum Einsatz kommt, kann das Arretierungsteil indirekt über die Schenkelfeder in der Arretierungsstellung formschlüssig gehalten werden, wobei ein Teil der Feder in dieser Stellung formschlüssig hinter einem Vorsprung, insbesondere von dem Lagerelement oder dem Gehäuse der Verriegelungsvorrichtung, gehalten ist. Somit dient der erwähnte Teil der Feder als Sperrmittel, nachdem es über den Vorsprung gerutscht ist und hinter dem Vorsprung formschlüssig gehalten wird. Damit kann auch das Arretierungsteil nicht mehr aus der Arretierungsstellung in die Freigabestellung überführt werden.

Ferner ist es denkbar, dass das Arretierungsteil und die Feder, insbesondere in Form einer Schenkelfeder, einteilig ausgestaltet sind. Folglich bildet das Arretierungsteil mit der Feder nur ein Bauteil, welches materialeinheitlich ausgestaltet sein kann. Durch dieses kombinierte Arretierungsteil (Arretierungsteil und Feder) kann ein selbstständiger Wechsel von der Freigabestellung in die Arretierungsstellung erreicht werden. Zweckmäßigerweise ist das kombinierte Arretierungsteil als eine besonders geformte Schenkelfeder ausgestaltet, die über einen ersten und zweiten Schenkel verfügt. Mit dem ersten Schenkel kann sich die besondere Schenkelfeder beispielsweise am Lagerelement oder dem Gehäuse abstützen, um somit die erforderliche Abstützkraft für den zweiten Schenkel aufzubringen. Der zweite Schenkel dient zur formschlüssigen Arretierung des Sperrglieds, wozu der zweite Schenkel beispielsweise einen bogenförmigen Vorsprung aufweisen kann, der mit einem Absatz oder einer Vertiefung im Sperrglied formschlüssig zusammenwirkt, sofern sich der zweite Schenkel in der Arretierungsstellung befindet. Dieser erwähnte Vorsprung kann auch durch einen Nocken oder dergleichen, der an dem zweiten Schenkel der Schenkelfeder angeordnet ist, realisiert werden. Zusätzlich kann der zweite Schenkel des kombinierten Arretierungsteils ein gekröpftes Ende aufweisen, welches dazu geeignet ist, das kombinierte Arretierungsteil in der Freigabestellung zu halten, indem das bereits erwähnte Sicherungsteil, insbesondere mit seinem Funktionsbereich oder einer Spitze, form- und/oder kraftschlüssig mit dem gekröpften Ende des zweiten Schenkels zusammenwirkt. Wird nun das Sicherungsteil entfernt, so wird das gekröpfte Ende des zweiten Schenkels nicht mehr durch das Sicherungsteil, insbesondere dem Funktionsbereich bzw. der Spitze gehalten, so dass der zweite Schenkel von der Freigabestellung selbstständig in die Arretierungsstellung wechselt.

Zusätzlich oder optional kann zum Beispiel am Lagerelement oder am Gehäuseinneren ein Vorsprung vorgesehen sein, der das kombinierte Arretierungsteil, insbesondere den zweiten Schenkel, formschlüssig in der Arretierungsstellung fixiert. Der zuvor genannte Vorsprung kann hierzu einen Gleit- und einen Haltebereich aufweisen, wobei der Gleitbereich dazu dient, dass der zweite Schenkel des kombinierten Arretierungsteils mühelos über den Vorsprung gleiten kann, wohingegen der anschließende Haltebereich dazu dient, den zweiten Schenkel in der Arretierungsstellung formschlüssig zu sichern. Hierzu kann zum Beispiel der Vorsprung keilartig ausgestaltet sein, wobei die schräg verlaufende Oberfläche des keilartigen Vorsprungs den Gleitbereich darstellt und die senkrecht abfallende und abschließende Fläche des keilförmigen Vorsprungs den Haltebereich bildet.

Ferner ist es bei einer besonderen Ausführungsform des kombinierten Arretierungsteils denkbar, dass der erste Schenkel derart ausgestaltet ist, dass er den zweiten Schenkel des kombinierten Arretierungsteils in seiner Freigabestellung form- und/oder kraftschlüssig hält. Zu diesem Zweck kann der erste Schenkel ein gekröpftes Ende aufweisen, wobei zusätzlich eine Ausnehmung im gekröpften Ende dafür vorgesehen sein kann, den zweiten Schenkel form und/oder kraftschlüssig zu halten. Durch das Entfernen des Sicherungsteils kann dann der zweite Schenkel aufgrund der vorherrschenden Federkräfte aus der Ausnehmung im ersten Schenkel bewegt werden, um in die Arretierungsstellung über zu wechseln. Hierbei kann ebenfalls der erste Schenkel mit dem gekröpften Ende den zweiten Schenkel formschlüssig in der Arretierungsstellung sichern, so dass für die formschlüssige Sicherung keine weiteren Bauteile benötigt werden. Optional kann selbstverständlich auch der erwähnte Vorsprung vorgesehen sein, wodurch der zweite Schenkel zweifach in der Arretierungsstellung formschlüssig gehalten ist.

Bei einer anderen Variante der erfindungsgemäßen Vorrichtung wird das Arretierungsteil in der Arretierungsstellung formschlüssig durch ein Anschlagmittel gehalten. Dieses Anschlagmittel ist zum Beispiel an dem Lagerelement oder dem Gehäuse der Verriegelungsvorrichtung angeordnet bzw. in diesem integriert. Bei dieser Variante kippt das Arretierungsteil bei einem Wechsel von der Freigabestellung in die Arretierungsstellung hinter das Anschlagmittel, wodurch der Formschluss zum Arretierungsteil entsteht. Zu diesem Zweck weist das Arretierungsteil ein Gegenanschlagmittel auf, welches aus einer Kante am Anschlagmittel bestehen kann. Auch das derartig formschlüssig gehaltene Arretierungsteil kann nur durch eine Zerstörung der Verriegelungsvorrichtung aus der Arretierungsstellung bewegt werden. Dabei ist es denkbar, dass die durch die Feder erzeugte Federkraft diagonal zu einer (Längs-) Achse, z. B. von dem Lagerelement, an dem Arretierungsteil angreift. Hierdurch kann eine Kippbewegung des Arretierungsteils zumindest im Bereich der Arretierungsstellung bewirkt werden. In diesem Fall kann das Arretierungsteil auf einfache Art und Weise hinter ein Anschlagmittel z. b. in Form eines Absatzes verschoben werden, wodurch eine formschlüssige Sicherung des Arretierungsteils in der Arretierungsstellung erreichbar ist. Optional kann vorgesehen sein, dass das gekippte Arretierungsteil in der Arretierungsstellung an einer Schräge sicher anliegt, wodurch ein punktförmiger Kontakt zum Lagerelement vermieden wird und eine sicher Positionierung des Arretierungsteils in der Arretierungsstellung erfolgt.

Bei einer weiteren Variante der Verriegelungsvorrichtung ist es vorgesehen, dass das Arretierungsteil in der Arretierungsstellung durch wenigstens ein Rastmittel, welches insbesondere direkt oder indirekt am Arretierungsteil angeordnet ist, gehalten ist. Dieses Rastmittel wirkt mechanisch zumindest mit einem Gegenrastmittel formschlüssig zusammen, wobei das Gegenrastmittel am Gehäuse der Verriegelungsvorrichtung oder an einem Lagerelement angeordnet ist. Beispielsweise kann das Rastmittel aus einem federnden Kunststoffelement bestehen, welches mit dem Gegenrastmittel formschlüssig zusammenwirkt. Ebenfalls können mehrere Rastmittel hintereinander und/oder auf unterschiedlichen Seiten an dem Arretierungsteil vorgesehen sein, die mit entsprechenden Gegenrastmitteln zusammenwirken. Darüber hinaus ist es denkbar, dass die Rastmittel als rampenförmige, nachgebende Vorsprünge ausgestaltet sind, die mit schuppenartigen oder keilförmigen Hinterschneidungen als Gegenrastmittel formschlüssig zusammenwirken. Somit können mehrere Rastmittel mit den entsprechenden Gegenrastmitteln dafür sorgen, dass das Arretierungsteil in der Arretierungsstellung endgültig verweilt. Selbstverständlich ist auch eine kinematische Umkehr zwischen dem Rastmittel und dem Gegenrastmittel konstruktiv möglich. Bei dieser Variante kann - muss aber nicht - auf ein Kippen des Arretierungsteils zum Erreichen der Arretierungsstellung verzichtet werden, so dass eine einfache Linearbewegung des Arretierungsteils ausreichend ist.

Ferner ist es denkbar, dass auch mehrere von außen zugängliche Bauelemente in Wirkverbindung mit dem Arretierungsteil stehen. Hierfür können mehrere Sicherungsteile eingesetzt werden, die insgesamt das Arretierungsteil in der Freigabestellung sichern. Sofern eines der Sicherungsteile entfernt wird, führt dieses zu einer Verlagerung des Arretierungsteils in die Arretierungsstellung. Zu diesem Zweck können alle eingesetzten Sicherungsteile in ihren Funktionsbereichen fest miteinander verbunden sein.

Insgesamt sind durch die zuvor genannten Varianten und Ausführungsbeispiele der erfindungsgemäßen Verriegelungsvorrichtungen einfache und solide Konstruktionen aufgeführt, wodurch die Sicherheit der erfindungsgemäßen Verriegelungsvorrichtung deutlich erhöht werden kann.

Weitere Maßnahmen und Vorteile sowie technische Merkmale der Erfindung ergeben sich aus den Ansprüchen, der nachfolgenden Beschreibung und den Zeichnungen. In den nachstehenden Figuren ist die erfindungsgemäße Verriegelungsvorrichtung in mehreren Ausführungsbeispielen detailliert dargestellt. Es zeigen:
- Fig. 1: eine schematische Schnittdarstellung der erfindungsgemäßen Verriegelungsvorrichtung, welche in Wirkverbindung mit dem funktionswesentlichen Bauteil steht,
- Fig. 2a: eine dreidimensionale Darstellung einer ersten Variante des Arretierungsteils in einer Arretierungsstellung mit einem Steuerelement,
- Fig. 2b: eine Draufsicht auf eine vergleichbare Variante des Arretierungsteils aus Fig. 2a in einer Arretierungsstellung mit einem Steuerelement,
- Fig. 3: eine dreidimensionale Darstellung der wichtigsten Bauteile der erfindungsgemäßen Verriegelungsvorrichtung in gemeinsamer Wirkver- bindung, wobei das Arretierungsteil in der Freigabestellung angeordnet ist,
- Fig. 4a: Draufsicht auf ein eine zweite Variante eines verschieblich gelagerten Arretierungsteils mit einem seitlich angeordneten, stegförmigen Rastmittel,
- Fig. 4b: Draufsicht auf ein ähnliches Arretierungsteil aus Fig. 4b in der Arretierungsstellung, wobei das Rastmittel rampenartig ausgestaltet ist,
- Fig. 5: Draufsicht auf ein verschieblich gelagertes Arretierungsteil, wie in Fig. 3 und 4, allerdings mit einem Anschlagmittel bzw. Gegenanschlagmittel,
- Fig. 6a: Draufsicht auf ein weiteres Arretierungsteil, welches über eine Schenkelfeder in der Arretierungsstellung gehalten ist,
- Fig. 6b: Schnittdarstellung zu Fig. 6a, wobei der Federweg der Schenkelfeder skizziert dargestellt ist,

- Fig.7a: Draufsicht auf ein zusätzliches Arretierungsteil mit einer diagonal wirkende Feder in der Freigabestellung,
- Fig. 7b: Draufsicht auf das zusätzliche Arretierungsteil aus Fig. 7a, welches sich in der Arretierungsstellung befindet,
- Fig. 8a: Draufsicht auf ein kombiniertes Arretierungsteil (Arretierungsteil und Feder), welches in Form einer besonderen Schenkelfeder ausgestaltet ist,
- Fig. 8b: Schnittdarstellung zu Fig. 8a, wobei der Federweg des kombinierten Arretierungsteils gestrichelt dargstellt ist,
- Fig. 9: dreidimensionale Darstellung des kombinierten Arretierungsteils aus den Figuren 8a und 8b und
- Fig. 10: dreidimensionale Darstellung eines weiteren Ausführungsbeispiels eines kombinierten Arretierungsteils, welches sich selbst in der Arretierungsstellung formschlüssig sichert.

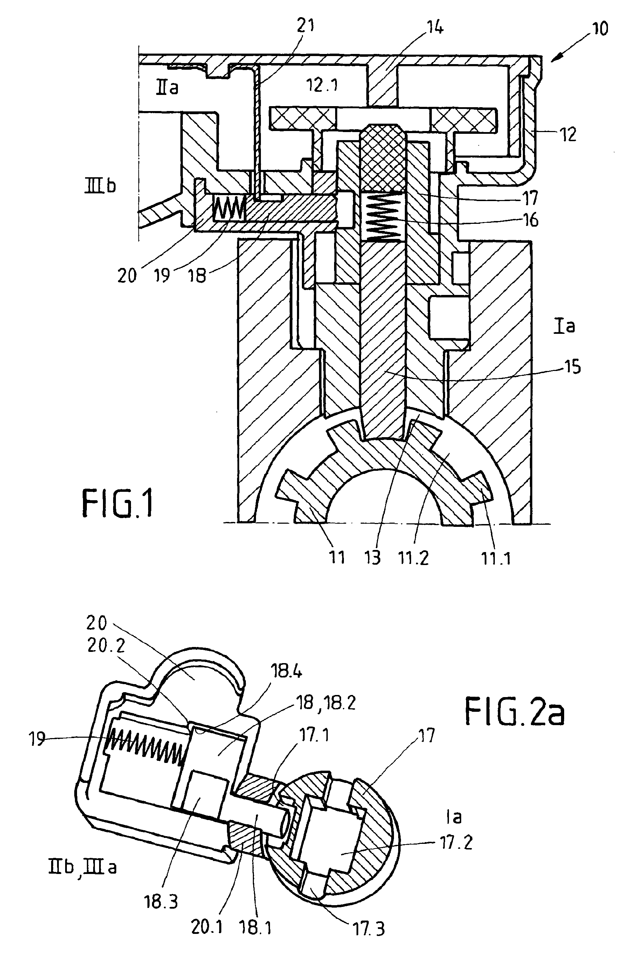

In der Fig. 1 ist der wesentliche Teil der Verriegelungsvorrichtung 10 schematisch dargestellt. Dabei wird ein funktionswesentliches Bauteil 11, welches in dem vorliegenden Fall als eine Lenkradsäule ausgestaltet ist, über ein Sperrglied 15 der Verriegelungsvorrichtung 10 blockiert. Hierzu befindet sich das Sperrglied 15 in der Verriegelungsposition la, in der es in einer mechanischen Wirkverbindung mit dem funktionswesentlichen Bauteil 11 steht. Das Sperrglied 15 ist selbst senkrecht (in der Darstellung der Fig. 1) verschieblich in der Verriegelungsvorrichtung 10 angeordnet. Die eigentliche Bewegung des Sperrgliedes 15 wird über das Steuerelement 17 bewirkt. Damit das Sperrglied 15 nicht jeder Relativbewegung des Steuerelementes 17 folgen muss, ist zwischen dem Steuerelement 17 und dem Sperrglied 15 ein Federelement 16 angeordnet. Dieses Federelement 16 hat die Aufgabe, das Sperrglied 15 in eine Vertiefung 11.2 des funktionswesentlichen Bauteils 11 zu drücken, sofern das Sperrglied 15 zur Zeit auf einen Vorsprung 11.1 in der

Verriegelungsposition la drückt. Wird nun das funktionswesentliche Bauteil 11 ein wenig gedreht, so drückt die Feder 16 das Sperrglied 15 von dem Steuerelement 17 weg, so dass es in die Vertiefung 11.2 gelangt und somit einen Formschluss mit dem funktionswesentlichen Bauteil 11 eingeht. Das Steuerelement 17 wird selbst über einen Motor oder eine Mechanik direkt oder indirekt über weitere Bauteile oder ein Getriebe betätigt bzw. bewegt.

Die gesamte Verriegelungsvorrichtung 10 ist mit einem Gehäuse 12 stationär zum funktionswesentlichen Bauteil 11 angeordnet. Für Montage-/ und Reparaturzwecke ist das Gehäuse 12 mit einem Gehäusedeckel 14 bzw. einem Verschlussteil 14, welches beispielsweise ein von außen zugängliches Bauelement 14 darstellt, versehen, wodurch das Gehäuseinnere 12.1 unzugänglich wird.

Zur Erhöhung der (Einbruch-) Sicherheit der vorliegenden Verriegelungsvorrichtung 10 ist diese mit einem Arretierungsteil 18 ausgestattet. Dieses Arretierungsteil 18 wird im vorliegenden Fall über ein Sicherungsteil 21 in der Freigabestellung IIIb gehalten. Das Sicherungsteil 21 besteht selber aus einem abgewinkelten Formblechstanzteil, welches fest mit dem Verschlussteil 14 verbunden ist. Hierzu kann das Sicherungsteil 21 mit seinem Befestigungsbereich 21.1 form-, kraft- und/oder stoffschlüssig mit dem Verschlussteil 14 verbunden sein. Mit dem anderen Ende des Sicherungsteils 21, nämlich dem Funktionsbereich 21.2 bzw. der Spitze 21.2 wird das Arretierungsteil 18 in der Freigabestellung IIIb gehalten. Zu diesem Zweck ragt das Sicherungsteil 21 mit seinem Funktionsbereich 21.2 durch einen schmalen Durchbruch oder Schlitz in eine Ausnehmung 18.3 des Arretierungsteils 18 hinein. Somit wird auch das Arretierungsteil 18 kraft- und/oder formschlüssig durch das Sicherungsteil 21 in der Freigabestellung IIIb gehalten.

Durch ein unerlaubtes oder gewaltsames Öffnen des Gehäuses 12 wird das Sicherungsteil 21 mit dem Verschlussteil 14 entfernt, wodurch es aus seiner Ruhelage IIa in seine Entsicherungslage IIb wechselt. Dieser Wechsel der Ruhelage IIa in die Entsicherungslage IIb hat zur Folge, dass auch das Arretierungsteil 18 aus seiner Freigabestellung IIIb in seine Arretierungsstellung IIIa wechselt. Zu diesem Zweck ist optional das Federelement 19, das als eine Druckfeder ausgestaltet ist, vorgesehen, welches die erforderliche Federkraft auf das Arretierungsteil 18 ausübt.

Wie aus der Fig. 1 weiter zu erkennen ist, ist das Arretierungsteil 18 vollständig in dem Gehäuse 12 der Verriegelungsvorrichtung 10 eingekapselt. Von unten ist das Arretierungsteil 18 durch ein zusätzliches Lagerelement 20 geschützt und von oben wird das Arretierungsteil 18 durch ein Teil des Gehäuses 12 selber eingebettet. Nur durch den schmalen Durchbruch in dem Gehäuse 12 ist ein Zugang zu dem Arretierungsteil 18 möglich. Wenn das Gehäuse 12 unsachgemäß geöffnet wird, wird somit auch das Sicherungsteil 21 aus der Ruhelage IIa in die Entsicherungslage IIb bewegt, in der es nicht mehr in Wirkverbindung mit dem Arretierungsteil 18 steht. In diesem Fall ragt das Sicherungsteil 21 auch nicht mehr durch den Durchbruch im Gehäuse 12. Folglich wechselt auch das Arretierungsteil 18 von seiner Freigabestellung IIIb in seine Arretierungsstellung IIIa. Da das Arretierungsteil 18 in der Arretierungsstellung IIIa formschlüssig gesichert wird, ist es auch nicht mehr möglich durch den oberen Durchbruch eine Änderung der Position des Arretierungsteils 18 zu bewirken. Folglich kann die gesamte Verriegelungsvorrichtung 10 nur noch komplett zerstört werden, um die Verriegelung des Sperrgliedes 15 mit dem funktionswesentlichen Bauteil 11 aufzuheben.

Bei den dargestellten Ausführungsbeispielen in den Figuren 1 bis 7b wirkt das Arretierungsteil 18 indirekt auf das Sperrglied 15, um dieses ggf. in der Verriegelungsposition la zu halten. Zu diesem Zweck geht das Arretierungsteil 18 mit dem zusätzlich vorgesehenen Steuerelement 17 einen Formschluss ein, um somit das Sperrglied 15 unverschieblich in der Verriegelungsposition la zu halten. Dieses ist selbstverständlich nur der Fall, sofern das Arretierungsteil 18 seine Arretierungsstellung IIIa einnimmt. Sofern das Arretierungsteil 18 in der Freigabestellung IIIb angeordnet ist, wird die normale Funktion der Verriegelungsvorrichtung 10, insbesondere des Sperrgliedes 15, nicht durch das Arretierungsteil 18 beeinflusst, so dass es auch in seine Entriegelungsposition Ib bewegbar ist.

In der Fig. 2a ist detailliert gezeigt, wie das Arretierungsteil 18 in der Arretierungsstellung IIIa einen Formschluss mit dem Steuerelement 17 eingeht. Zu diesem Zweck weist das Arretierungsteil 18 einen rausragenden Stift 18.1 auf, der mit einer Ausnehmung 17.1 in dem Steuerelement 17 einen Formschluss bewirkt. Folglich ist das Steuerelement 17 in der dargestellten Stellung IIIa des Arretierungsteils 18 unbeweglich in der Verriegelungsvorrichtung 10 gehalten. Hierdurch lässt sich auch nicht mehr das Sperrglied 15 aus der Verriegelungsposition la bewegen. In dem ringförmigen Steuerelement 17 ist zur Aufnahme des Sperrgliedes 15 eine rechteckförmige Führung 17.2 vorgesehen, in der das Sperrglied 15 selbst verschieblich gehalten ist. Das Sperrglied 15 kann optional über einen nicht gezeigten Haltestift in dem Steuerelement 17 gesichert werden. Zu diesem Zweck ist eine Aussparung 17.3 in dem Steuerelement 17 vorsehbar. Das erwähnte Sperrglied 15 ist ebenfalls nicht in der Fig. 2a dargestellt. Um den vorhandenen Formschluss zwischen dem Arretierungsteil 18 und dem Steuerelement 17 besser sichtbar zu machen, ist zumindest das Steuerelement 17 in Schnittzeichnung dargestellt.

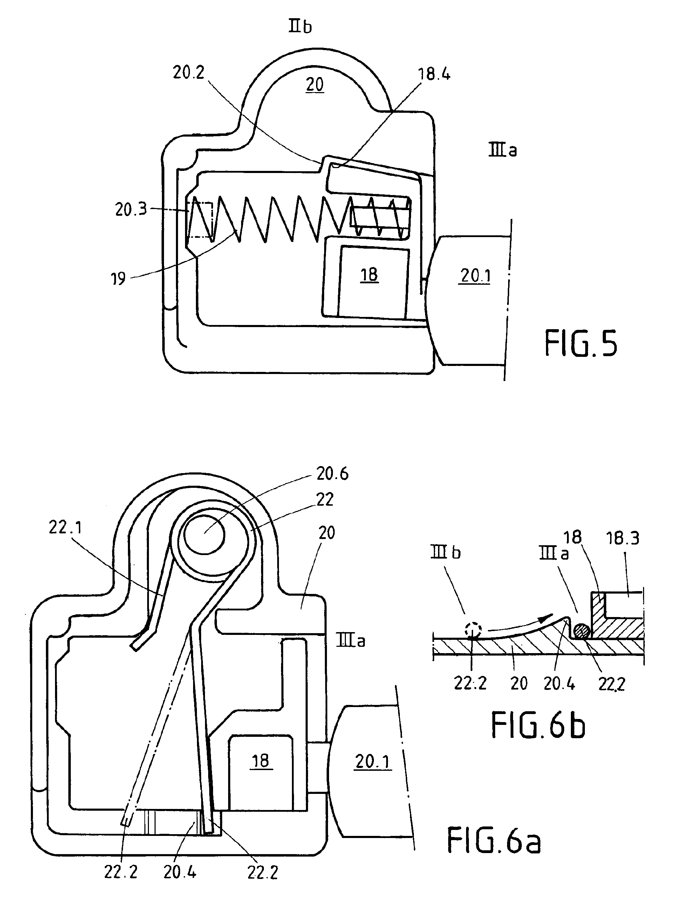

Weiter ist aus der Fig. 2a erkennbar, dass das Arretierungsteil 18 "L"-förmig ausgestaltet ist. Dabei besteht das Arretierungsteil 18 aus dem bereits erwähnten Stift 18.1, der zur Arretierung des Steuerelementes 17 und auch zur Führung des Arretierungsteils 18 dient, und aus dem Sockel 18.2, der zusätzlich mit einer Ausnehmung 18.3 oder einer Vertiefung 18.3 versehen ist. Die Ausnehmung 18.3 dient zur formschlüssigen Aufnahme des Sicherungsteils 21, insbesondere des Funktionsbereiches 21.2 in der Ruhelage IIa des Sicherungsteils 21 und der Freigabestellung IIIb des Arretierungsteils 18. In der Fig. 2a ist das Arretierungsteil 18 in der Arretierungsstellung IIIa dargestellt. Hierbei ist das Arretierungsteil 18 gegen den rechten Rand des Lagerelementes 20 durch das Federelement 19 verschoben worden. Das Lagerelement 20 kann mit dem vormontierten Arretierungsteil 18 durch eine Schraubenverbindung oder eine Nietverbindung oder dergleichen mechanisch mit dem Gehäuse 12 der Verriegelungsvorrichtung 10 befestigt sein. Weiter weist das Lagerelement 20 zumindest ein Anschlagmittel 20.2 in Form eines Vorsprunges auf, durch den das Arretierungsteil 18 in der Arretierungsstellung IIIa formschlüssig gehalten wird. Zu diesem Zweck ist das Arretierungsteil 18 selbst mit einem Gegenanschlagmittel 18.4 ausgestattet. Dieses Gegenanschlagmittel 18.4 kann zum Beispiel durch eine insbesondere rechteckförmige Kante am Arretierungsteil 18 ausgestaltet sein. In der Fig. 5 ist die erste Variante eines Formschlusses des Arretierungsteils 18 näher dargestellt.

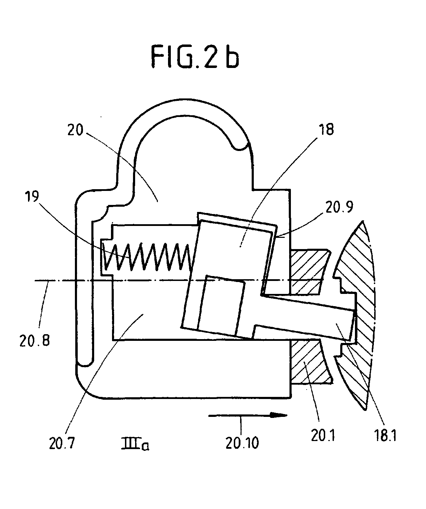

Aus der Fig. 2b wird deutlich, dass das Arretierungsteil 18 zunächst aus der Freigabestellung IIIb linear bewegt wird (s. Bewegungsrichtung 20.10) und anschließend leicht gekippt wird, um die Arretierungsstellung IIIa zu erreichen. Dabei wird das Arretierungsteil 18 am Ende seines Bewegungsfreiraums 20.7 diagonal zur Längsachse 20.8 geschwenkt. In der Arretierungsstellung IIIa liegt das Arretierungsteil 18 großflächig an einer dafür vorgesehenen Schräge 20.9 von dem Lagerelement 20 an. Ebenfalls ist in der Fig. 2b deutlich das Spiel zwischen dem Stift 18.1 vom Arretierungsteil 18 und dem Führungsbereich 20.1 des Lagerelementes 20 dargestellt. In der Arretierungsstellung IIIa wird das Arretierungsteil 18 hinter das Anschlagmittel 20.2 gekippt.

Aus der Fig. 5 wird deutlich, wie eine Längsverschiebung des Arretierungsteils 18 im Lagerelement 20 zu einer Kippbewegung des Arretierungsteils 18 führt. Dabei kippt das Arretierungsteil 18 um einen Winkel von ca. 3° bis 30°, bevorzugt zwischen 5° und 20°, insbesondere 10°, im Lagerelement 20, um somit den gewünschten Formschluss in der Arretierungsstellung IIIa zu erhalten. Die eigentliche Längsbewegung des Arretierungsteils 18 wird durch die Druckfeder 19 bewirkt. Die Druckfeder 19 ist zur sicheren Lagerung einerseits formschlüssig in einer Aufnahme 20.3 im Lagerelement 20 angeordnet und anderseits in einem Durchbruch des Arretierungsteils 18. Optional oder zusätzlich können Vorsprünge im Lagerelement 20 oder dem Arretierungsteil 18 von innen in die Spiralfeder 19 eingreifen, um somit eine sichere Lage des Federelementes 19 zu bewirken. Damit das Arretierungsteil 18 in seine Arretierungsstellung IIIa kippen kann, ist ein Spiel in der Lagerung des Arretierungsteils 18 vorgesehen. Zusätzlich greift das Federelement 19 derart am Arretierungsteil 18 an, dass es das Arretierungsteil 18 hinter das Anschlagmittel 20.2 verschiebt. Dafür liegt der Angriffspunkt des Federelementes 19 weit vom eigentlichen Kipppunkt des Arretierungsteils 18 entfernt, wobei der Angriffspunkt nahe dem Anschlagmittel 20.2 angeordnet ist. Der Kipppunkt des Arretierungsteils 18 liegt ungefähr mittig im Bereich des Stiftes 18.1. Zur besseren Führung des Arretierungsteils 18 ist zusätzlich ein Führungsbereich 20.1 am Lagerelement 20 vorgesehen, um das Arretierungsteil 18 über den Stift 18.1 insbesondere in der Arretierungsstellung IIIa zu führen. Außerdem dient der zusätzliche Führungsbereich 20.1 am Lagerelement 20 auch zur Kapselung des Arretierungsteils 18 innerhalb des Gehäuses 12. Wie in der dargestellten Arretierungsstellung IIIa in der Fig. 5 zu erkennen ist, kann das Arretierungsteil 18 nicht mehr durch äußere Einflüsse in die ursprüngliche Freigabestellung IIIb bewegt werden, da der Formschluss zwischen dem Anschlagmittel 20.2 und dem Gegenanschlagmittel 18.4 dieses verhindert. Im Gegensatz zu Variante der Verriegelungsvorrichtung 10 aus Fig. 2b ist keine Schräge 20.9 im Lagerelement 20 vorhanden, da das Arretierungsteil 18 im vorliegenden mit einer Schräge versehen ist, wodurch ebenfalls eine großflächige Anschlagsfläche entsteht.

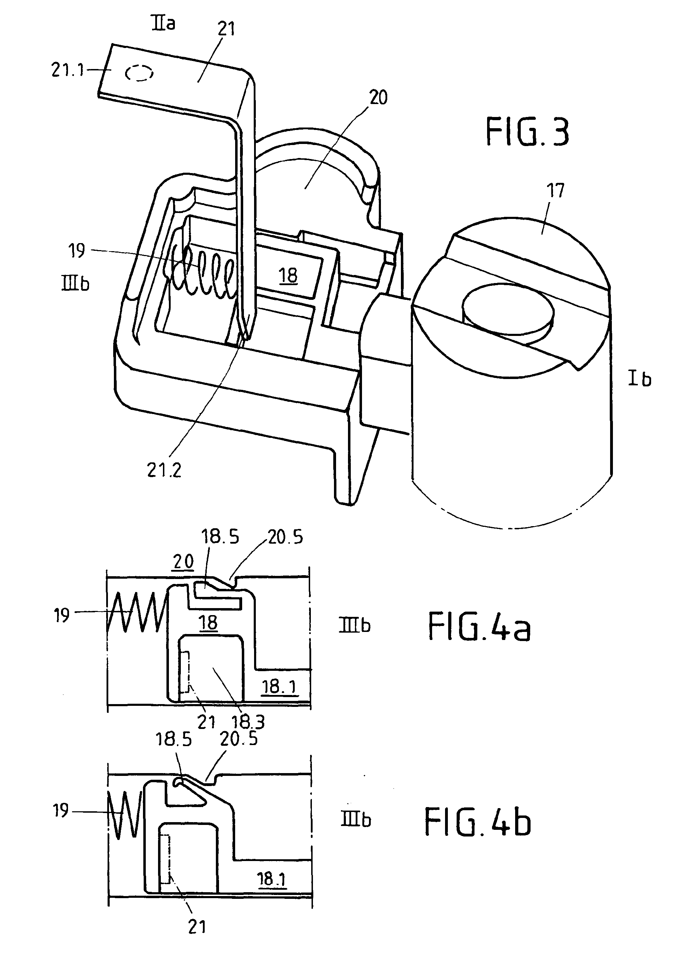

In der Fig. 3 ist eine dreidimensionale schematische Darstellung der funktionswichtigsten Bauteile der Erfindung offenbart. Zur besseren Übersicht wurde auf die Darstellung des Gehäuses 12 sowie auf das von außen zugänglichen Bauelement 14 verzichtet. Das Sicherungsteil 21, welches mit dem nicht dargestellten, von außen zugänglichen Bauelement 14 verbunden ist, ist in seiner Ruhelage IIa dargestellt. Hierbei hält es das Arretierungsteil 18 in der Freigabestellung IIIb, so dass das Sperrglied 15 frei über das Steuerelement 17 betätigbar ist. In der Fig. 3 ist die erste Variante des Formschlusses mit dem Anschlagmittel 20.2 dargestellt. Die genaue Funktion wurde bereits zu den Figuren 2 und 5 beschrieben. Aus der Fig. 3 wird deutlich, welcher Bewegungsablauf stattfindet, sofern das Sicherungsteil 21 aus der Ruhelage IIa in die Entsicherungslage IIb überführt wird. In diesem Fall wird der Formschluss zwischen der Spitze 21.2 des Sicherungsteils 21 und dem Arretierungsteil 18, insbesondere der Ausnehmung 18.3 aufgehoben, so dass das Federelement 19 das Arretierungsteil 18 in die Arretierungsstellung IIIa bewegt. Anhand der Fig. 3 ist gut zu erkennen, wie das Arretierungsteil 18 durch die seitlichen Wände des Lagerelementes 20 gekapselt umgeben ist. Um das Lagerelement 20 sicher an oder in dem Gehäuse 12 anzuordnen, ist der bogenförmige Bereich zur Befestigung vorgesehen.

In den Figuren 4a und 4b ist die zweite Variante zur Bildung des Formschlusses zur Halterung des Arretierungsteils 18 in der Arretierungsstellung IIIa gezeigt. In beiden Figuren (Fig. 4a und 4b) ist das jeweilige Arretierungsteil 18 in der Freigabestellung IIIb dargestellt. Ebenfalls ist gestrichelt das Sicherungsteil 21 in der Ruhelage IIa eingezeichnet. Durch die Entfernung des Sicherungsteils 21 wird das Arretierungsteil 18 durch die vorgesehene Druckfeder 19 in dem Lagerelement 20 längs verschoben. Dabei gleitet ein Rastmittel 18.5 an einem Gegenrastmittel 20.5 des Lagerelementes 20 entlang, bis es hinter dem Gegenrastmittel 20.5 zum Liegen kommt. Selbstverständlich können auch mehrere Rastmittel 18.5 hintereinander oder links-und rechtsseitig am Arretierungsteil 18 mit den entsprechenden Gegenrastmitteln 20.5 des Lagerelementes 20 zusammenwirken. Das dargestellte Gegenrastmittel 20.5 besteht aus einem keilartigen Vorsprung oder rampenartigen Vorsprung, an dem das stegartig und nachgebend ausgestaltete Ratsmittel 18.5 mit einer schrägen Führungsfläche entlang gleiten kann. Dabei wird das nachgebende oder federnde Rastmittel 18.5 eingedrückt, um an dem keilförmigen Vorsprung 20.5 vorbeizukommen. Sobald das Rastmittel 18.5 den Vorsprung 20.5 passiert hat, federt es wieder nach außen und bildet einen unlösbaren Formschluss zur sicheren Befestigung des Arretierungsteils 18 in der Arretierungsstellung IIIa. Es sei an dieser Stelle erwähnt, dass selbstverständlich das Gegenrastmittel 20.5 und Rastmittel 18.5 auch in einer umgekehrten Kinematik zueinander ausgestaltet sein können. Auch ist es denkbar, dass das Rastmittel 18.5 aus einem Kunststoffteil besteht, welches an dem Arretierungsteil 18 befestigt ist. Wie bereits erwähnt, kann auch das gesamte Arretierungsteil 18 aus einem Kunststoffformteil bestehen. In der Fig. 4b kommt ein bogenförmiges oder widerhakenartiges Rastmittel 18.5 zum Einsatz, welches ansonsten die gleiche Funktion innehat, wie das Rastmittel 18.5 aus Fig. 4a.

In der Fig. 6a und 6b ist eine dritte Variante für den Formschluss des Arretierungsteils 18 dargestellt. Hierbei kommt eine schenkelförmige Feder 22 zum Einsatz, die z. B. über einen Haltestift 20.6 in dem Lagerelement 20 fixiert ist. Dieser Haltestift 20.6 kann auch durch eine Halteschraube zur Befestigung des Lagerelementes 20 realisiert werden. Die erwähnte Schenkelfeder 22 sorgt ebenfalls für eine Längsverschiebung des Arretierungsteils 18 in dem Lagerelement 20. Bei dieser Variante geht das Arretierungsteil 18 nicht direkt einen Formschluss mit dem Lagerelement 20 ein, sondern der Formschluss wird über die Schenkelfeder 22 gebildet. Die Schenkelfeder 22 verfügt selbst über einen ersten Schenkel 22.1 und einen zweiten Schenkel 22.2. Der erste Schenkel 22.1 liegt fest am Lagerelement 20 an. Dabei kann der erste Schenkel 22.1 kürzer ausgestaltet sein. Der zweite Schenkel 22.2 ist dagegen länger ausgestaltet, um mit dem Arretierungsteil 18 korrespondieren zu können. In der gestrichelten Darstellung des Schenkels 22.2 befindet sich auch das Arretierungsteil 18 in der Freigabestellung IIIb in der es von dem Sicherungsteil 21 gehalten ist. Nachdem nun das Sicherungsteil 21 entfernt wird, drückt der zweite Schenkel 22.2 das Arretierungsteil 18 in die Arretierungsstellung IIIa. Dabei läuft der zweite Schenkel 22.2 mit seinem Ende über einen rampenförmigen Vorsprung 20.4 der an dem Lagerelement 20 angeordnet oder integriert ist. In der Schnittdarstellung aus der Fig. 6b ist ein versetzter Schnitt, der parallel zur unteren Kante des Lagerelementes 20 verläuft, dargestellt. Dabei ist deutlich der rampenförmige Vorsprung 20.4 des Lagerelementes 20 gezeigt. Ebenfalls ist die Lage des zweiten Schenkels 22.2 in der Freigabestellung IIIb des Arretierungsteils 18 und der Arretierungsstellung IIIa angedeutet. Wie aus der Fig. 6b deutlich wird, kann das Arretierungsteil 18 nicht mehr aus der Arretierungsstellung IIIa in seiner ursprünglichen Freigabestellung IIIb verschoben werden, da der zweite Schenkel 22.2 hinter dem rampenförmigen Vorsprung 20.4 formschlüssig angeordnet ist.

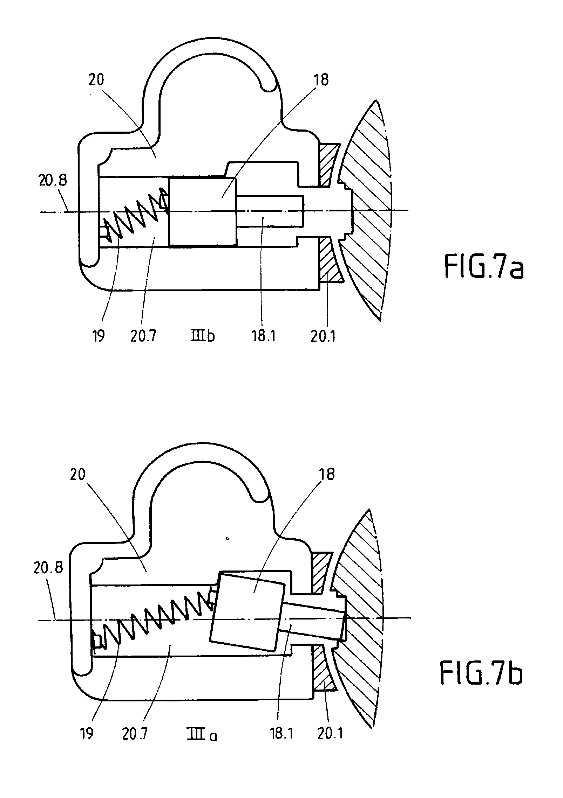

In den letzten Fig. 7a und 7b ist eine vierte Variante der erfindungsgemäßen Verriegelungsvorrichtung 10 einerseits in der Freigabestellung IIIb (s. Fig. 7a) und andererseits in der Arretierungsstellung IIIa (s. Fig. 7b) gezeigt, bei der das Arretierungsteil 18 sowie das Lagerteil 18 platzsparend ausgestaltet sind. Zu diesem Zweck wurde der Bewegungsfreiraum 20.7 minimiert, in dem ein deutlich schmaleres Arretierungsteil 18 Verwendung findet, als bei den anderen Varianten. Selbstverständlich ist diese schmale Ausgestaltung auch auf die übrigen Varianten übertragbar ist. Ferner greift das Federelement 19, welches als eine Druckfeder 19 vorhanden ist, diagonal zur Achse 20.8 an dem Arretierungsteil 18 an, wodurch die Kippbewegung in die Arretierungsstellung IIIa erzielt wird. Ebenfalls kann die Länge des Bewegungsweges des Arretierungsteils 18 minimiert werden, wodurch sich zusätzlich Platz einsparen lässt. Selbstverständlich kann die vorliegende Variante auch mit einer Anschlagsschräge 20.9 am Lagerelement 20 ausgestattet sein.

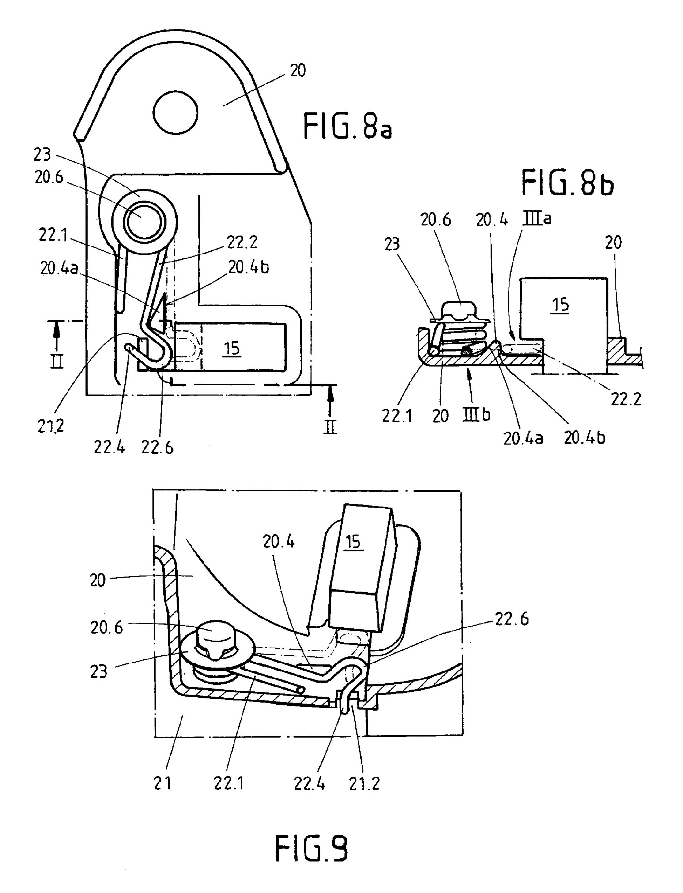

In den Fig. 8a und 8b ist eine weitere Ausführungsform der Erfindung dargestellt. Hierbei ist das Arretierungsteil 18 mit der Feder 19 derart kombiniert, dass es einteilig und/oder materialeinheitlich ausgestaltet ist. Die Feder 19 ist hierbei selber als Schenkelfeder 22 ausgestaltet und weist einen ersten Schenkel 22.1 sowie einen zweiten Schenkel 22.2 auf. Mit dem ersten Schenkel 22.1 stützt sich das kombinierte Arretierungsteil 18, 19 am Lagerelement 20 oder dem Gehäuseinneren 12.1 ab, um somit die erforderliche Federkraft auf den zweiten Schenkel 22.2 übertragen zu können. Der zweite Schenkel 22.2 dient zur direkten - im Gegensatz zu den anderen Ausführungsformen der vorliegenden Erfindung - Sicherung des Sperrgliedes 15 in der Arretierungsstellung IIIa. Zu diesem Zweck weist der zweite Schenkel 22.2 zum Beispiel den dargestellten bogenförmigen Vorsprung 22.6 auf. Ebenfalls ist es denkbar, an den zweiten Schenkel 22.2 einen vergleichbaren Nocken anzuordnen, welcher formschlüssig mit dem Sperrglied 15 zusammenwirkt. Das Sperrglied 15 ist in den Fig. 8 bis 10 in seiner Verriegelungsposition la dargestellt. Ferner weist das Sperrglied 15 einen Absatz 15.1 bzw. eine Vertiefung 15.1 auf, in die der zweite Schenkel 22.2 des kombinierten Arretierungsteils 18, 19 formschlüssig eindringen kann. Ferner ist das kombinierte Arretierungsteil 18, 19 in den Fig. 8 bis 10 sowohl in der Freigabestellung IIIb als auch in der Arretierungsstellung IIIa - dort jedoch nur gestrichelt - dargestellt. Das ebenfalls vorhandene Sicherungsteil 21 ist in den Fig. 8 bis 10 jeweils in der Ruhelage IIa angeordnet.

Die Fig. 8a zeigt ferner einen Vorsprung 20.4 der rampenförmig oder keilartig am Lagerelement 20 vorgesehen ist. Dieser Vorsprung 20.4 weist einen Gleitbereich 20.4a und einen Haltebereich 20.4b auf. Der Gleitbereich 20.4a ist keil- oder rampenförmig ausgestaltet (s. Fig. 8b), so dass der zweite Schenkel 22.2 des kombinierten Arretierungsteils 18, 19 aus der Freigabestellung IIIb problemlos darüber gleiten kann, um in die Arretierungsstellung IIIa zu wechseln. Nachdem der zweite Schenkel 22.2 das Ende des Gleitbereichs 20.4a (s. höchste Erhebung oder Spitze von Vorsprung 20.4 in Fig. 8b) erreicht hat, rutscht der zweite Schenkel 22.2 parallel zum Haltebereich 20.4b hinab und kommt auf dem Lagerelement 20 zu liegen. Aus dieser Arretierungsstellung IIIa, in der das kombinierte Arretierungsteil 18, 19 formschlüssig mit dem Sperrglied 15 zusammenwirkt, kann der zweite Schenkel 22.2 nicht wieder zurückbewegt werden, um die Freigabestellung IIIb zu erhalten, da der Haltebereich 20.4b den zweiten Schenkel 22.2 formschlüssig in der Arretierungsstellung IIIa hält. Der Haltebereich 20.4a ist im Wesentlichen orthogonal zur Oberfläche des Lagerelements 20 ausgerichtet, auf der der zweite Schenkel 22.2 in der Arretierungsstellung IIIa zu liegen kommt.

Wie aus der Fig. 8b und Fig. 9 deutlich sichtbar wird, wirkt der zweite Schenkel 22.2 mit seinem bogenförmigen Vorsprung 22.6 formschlüssig mit einem Absatz bzw. einer Vertiefung 15.1 im Sperrglied 15 zusammen, so dass das Sperrglied 15 selbst nicht mehr aus der Verriegelungsposition la in die Entriegelungsposition lb überführt werden kann. Zur Erhöhung der Festigkeit der vorliegenden Verriegelungsvorrichtung 10 ist das Sperrglied 15 mit einem fast geschlossenen Verstärkungsrand umgeben, der von dem Lagerelement 20 gebildet wird. Nur im Wirkungsbereich des Vorsprungs 22.6 des zweiten Schenkels 22.2 ist dieser Verstärkungsrand unterbrochen. In dem dargestellten Schnitt aus Fig. 8b ist rechts neben dem Sperrglied 15 deutlich der Verstärkungsrand im Lagerelement 20 zu erkennen.

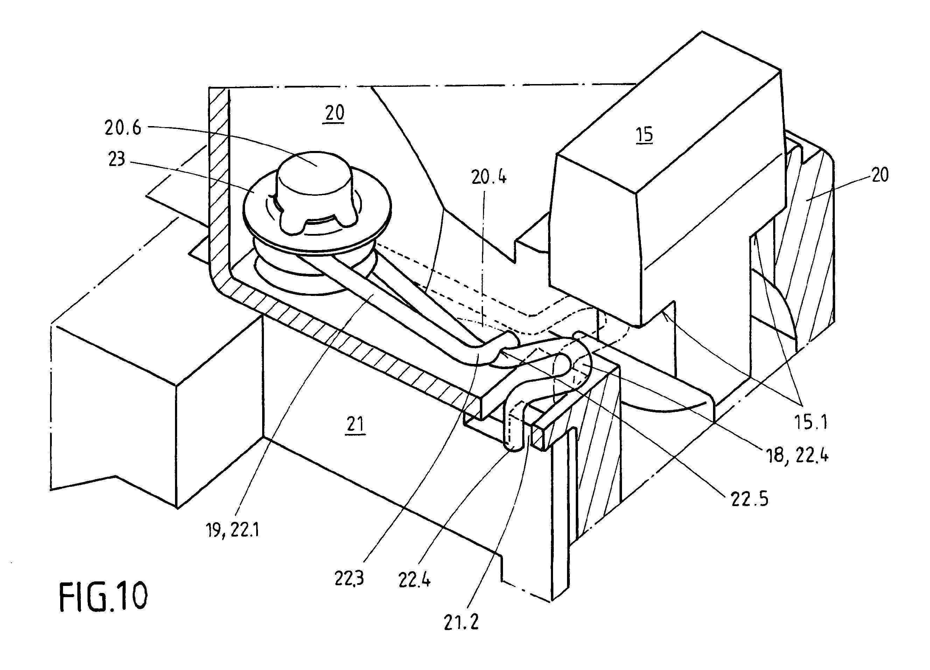

In der Fig. 10 ist ein weiteres Ausführungsbeispiel der Erfindung mit einem kombinierten Arretierungsteil 18, 19 dargestellt. Zur besseren Übersicht wurde das Lagerelement 20 teilweise geschnitten dargestellt, um somit die technischen Details der besonderen Schenkelfeder 22 (die das kombinierte Arretierungsteil 18, 19 bildet) sichtbar zu machen. Bei der vorliegenden Variante wird der zweite Schenkel 22.2 in der Arretierungsstellung IIIa durch ein gekröpftes Ende 22.3 des ersten Schenkels 22.1 formschlüssig gesichert. Somit sichert sich das vorliegende kombinierte Arretierungsteil 18, 19 selbst in der Arretierungsstellung IIIa formschlüssig. Optional kann der bereits erwähnte Vorsprung 20.4 zur Sicherung des kombinierten Arretierungsteils 18, 19 in der Arretierungsstellung IIIa vorgesehen sein.

In der Freigabestellung IIIb wird der zweite Schenkel 22.2 des kombinierten Arretierungsteils 18, 19 durch das gekröpfte Ende 22.4 gehalten, welches formschlüssig mit dem Funktionsbereich 21.2 des Sicherungsteils 21 zusammenwirkt. Dieses Sicherungsteil 21 hält das kombinierte Arretierungsteil 18, 19 von unten - im Gegensatz zu dem Ausführungsbeispiel aus Fig. 3, welches von oben wirkt - in der Freigabestellung IIIb. Wird nun das Sicherungsteil 21 entfernt, welches im vorliegenden Fall aus Fig. 10 durch eine Bewegung nach unten geschieht, so drückt sich der zweite Schenkel 22.2 aus der Freigabestellung IIIb selbstständig in die Arretierungsstellung IIIa. Damit für das gekröpfte Ende 22.4 des zweiten Schenkels 22.2 Platz im Lagerelement 20 vorgesehen ist, ist eine großzügige Aussparung bzw. ein Durchbruch vorgesehen. In der Freigabestellung IIIb liegt der zweite Schenkel 22.2 unter dem ersten Schenkel 22.1, wobei zusätzlich eine Ausnehmung 22.5 im gekröpften Ende 22.3 des ersten Schenkels 22.1 vorgesehen sein kann. Nachdem sich der zweite Schenkel 22.2 aus der Freigabestellung IIIb in die Arretierungsstellung IIIa bewegt hat, kann dieser nicht mehr zurück in die Freigabestellung IIIb bewegt werden, da dieser an das senkrecht abgeschnittene Ende 22.3 des gekröpften ersten Schenkels 22.1 anstößt.

Optional kann zu dem Ausführungsbeispiel aus Fig. 10 auch der zweite Schenkel 22.2 eine vergleichbare Ausnehmung 22.5 aufweisen, wohingegen der erste Schenkel 22.1 ohne eine Ausnehmung 22.5 ausgestaltet sein kann. Auch kann auf die dargestellte Ausnehmung 22.5 vollständig verzichtet werden, wodurch nicht die Funktionsweise des kombinierten Arretierungsteils 18, 19 beeinträchtigt wird. Zusätzlich kann auch der Vorsprung 20.4 angeordnet sein, welcher dementsprechend in der Fig. 10 gestrichelt dargestellt ist.

Das als Schenkelfeder 22 ausgestaltete kombinierte Arretierungsteil 18, 19 wird über den bereits erwähnten Haltestift 20.6 im Lagerelement 20 angeordnet. Damit die besondere Schenkelfeder 22 sicher am Lagerelement 20 gehalten ist, kann zusätzlich ein Haltemittel 23, in Form einer Sicherungsscheibe, eines Klemmringes, einer Mutter oder dergleichen, am Haltestift 20.6 vorgesehen sein. Durch dieses zusätzliche Haltemittel 23 kann die besondere Schenkelfeder 22 form- und/oder kraftschlüssig am Lagerelement 20 sicher positioniert werden.

Ebenfalls ist es denkbar, dass der zweite Schenkel 22.2 der Schenkelfeder 22 in der Freigabestellung IIIb durch den ersten Schenkel 22.1 niedergedrückt wird. Zu diesem Zweck kann der erste Schenkel 22.1 derart abgewinkelt ausgestaltet sein, dass er einen Bereich aufweist, der im Wesentlichen parallel zum Boden des Lagerelementes 20 ausgestaltet ist, auf dem der zweite Schenkel 22.2 aufliegt bzw. über den der zweite Schenkel 22.2 geführt wird. Dieser parallele Bereich des ersten Schenkels 22.1 kann dazu genutzt werden, den zweiten Schenkel 22.2 niederzudrücken, so dass auch durch Stöße, Vibrationen oder andere äußere Einflüsse ein ungewolltes Arretieren des Sperrgliedes 15 durch das kombinierte Arretierungsteil 18, 19, insbesondere den zweiten Schenkel 22.2 der Schenkelfeder 22, sicher vermieden wird. Dabei ist es weiterhin denkbar, dass das Ende 22.3 des ersten Schenkels 22.1 zusätzlich dazu genutzt wird, um sich hinter einer Ausnehmung oder einem Vorsprung (z. B. vom Lagerelement 20) abzustützen, damit der erste Schenkel 22.1 - wie bereits erwähnt - mit dem parallelen Bereich den zweiten Schenkel 22.2 in der Freigabestellung IIIb sichert und/oder zuverlässig niederdrückt, auch wenn das Material der Schenkelfeder 22 nach Jahren ermüden sollte und somit ggf. die Federkraft nach lassen sollte. Grundsätzlich ist die Federkraft des Federelementes 19 bzw. der Schenkelfeder 22 derart ausgelegt, dass diese den (aktiven) zweiten Schenkel 22.2 immer zuverlässig von der Freigabestellung IIIb in die Arretierungsstellung IIIa überführt, wenn das Sicherungsteil 21 aus der Ruhelage IIa entfernt wird. Kommt es nunmehr zu einem Auslösen des kombinierten Arretierungsteils 18, 19 so dass es von der Freigabestellung IIIb in die Arretierungsstellung IIIa wechselt, so fährt der zweite Schenkel 22.2 hinter den parallelen Bereich des ersten Schenkels 22.1 und kann durch einen vorhandenen Absatz in dem Ende 22.3 des ersten Schenkels 22.1, der durch eine weitere Abwinkelung des Schenkel 22.1 erzeugbar ist, formschlüssig in der Arretierungsstellung IIIa gehalten werden. Auch bei dieser Variante kann zusätzlich der Vorsprung 20.4 (s. Fig. 8a - 10) vorgesehen sein, um den zweiten Schenkel 22.2 der Schenkelfeder 22 nicht nur formschlüssig durch den ersten Schenkel 22.1 zu arretieren sondern auch zusätzlich durch den Vorsprung 20.4. Auch ist es möglich, dass nur der Vorsprung 20.4 vorgesehen ist, um den zweiten Schenkel 22.2 formschlüssig zu arretieren. In diesem Fall kann auf eine zusätzliche Abwinkelung des Schenkels 22.1 verzichtet werden.

Abschließend ist noch zu erwähnen, dass die hier dargestellten Ausführungsbeispiele und Varianten der erfindungsgemäßen Verriegelungsvorrichtung 10, insbesondere zur formschlüssigen Arretierung des Arretierungsteils 18 in der Arretierungsstellung IIIa beliebig miteinander kombinierbar sind, sofern sich diese nicht explizit ausschließen.

### Bezugszeichenliste

- 10: Verriegelungsvorrichtung
- 11: funktionswesentliches Bauteil
- 11.1: Vorsprung
- 11.2: Vertiefung
- 12: Gehäuse
- 12.1: Gehäuseinnere
- 13: Öffnung in Gehäuse für 15
- 14: von außen zugängliches Bauelement, wie z. B. Schließzylinder, Verschlussteil, Gehäusedeckel od. dergl.
- 15: Sperrglied
- 15.1: Absatz / Vertiefung
- 16: Federelement
- 17: Steuerelement
- 17.1: Ausnehmung für 18
- 17.2: Führung für 15
- 17.3: Aussparung für Haltestift
- 18: Arretierungsteil
- 18.1: Stift
- 18.2: Sockel
- 18.3: Ausnehmung für 21
- 18.4: Kante / Gegenanschlagsmittel zu 20.2
- 18.5: Rastmittel zu 20.5
- 19: Federelement
- 20: Lagerelement
- 20.1: Führungsbereich für 18, insbesondere für 18.1
- 20.2: Anschlagmittel
- 20.3: Aufnahme für 19
- 20.4: Vorsprung (rampenförmig)
- 20.4a: Gleitbereich
- 20.4b: Haltebereich
- 20.5: Gegenrastmittel zu 18.5
- 20.6: Haltestift für 22
- 20.7: Bewegungsfreiraum für 18
- 20.8: Längsachse
- 20.9: Schräge
- 20.10: Bewegungsrichtung von 18
- 21: Sicherungsteil
- 21.1: Befestigungsbereich
- 21.2: Funktionsbereich / Spitze
- 22: Schenkelfeder
- 22.1: Erster Schenkel
- 22.2: Zweiter Schenkel
- 22.3: Gekröpftes Ende von 22.1
- 22.4: Gekröpftes Ende von 22.2
- 22.5: Ausnehmung für 22.2
- 22.6: Bogenförmiger Vorsprung von 22.2
- 23: Haltemittel

### Sperrglied 15

- la: Zeichen für die Verriegelungsposition
- lb: Zeichen für die Entriegelungsposition

### Sicherungsteil 21

- IIa: Zeichen für die Ruhelage
- IIb: Zeichen für die Entsicherungslage

### Arretierungsteil 18

- IIIa: Zeichen für die Arretierungsstellung
- IIIb: Zeichen für die Freigabestellung

## Patentansprüche

1. Verriegelungsvorrichtung (10) zum Verriegeln und/oder Entriegeln eines funktionswesentlichen Bauteils (11) eines Fahrzeugs mit
einem Gehäuse (12), welches Insbesondere zur Befestigung der Verriegelungsvorrichtung (10) an dem Bauteil (11) dient, und
einem bewegbaren Sperrglied (15), welches zumindest zwei Positionen einnehmen kann, nämlich
eine Verriegelungsposltlon (Ia), In der das Sperrglied (15) aus dem Gehäuse (12) durch eine Öffnung (13) rausragt und In einer Wirkverbindung mit dem Bauteil (11) steht, und
eine Entrlegelungsposition(16), in der das Sperrglied (15) in keiner Wirkverbindung mit dem Bauteil (11) steht, und
einem Arretierungsteil (18), welches in einher. Arretierungsstellung (IIIa) das Sperrglied (15) in der Verriegelungsposition (Ia) arretiert,
**dadurch gekennzeichnet,**
**dass** das Arretierungstell (18) das Sperrglied (15) nur dann In der Verriegelungsposition (Ia) arretiert, wenn die Verriegelungsvorrichtung (10) unberechtigt geöffnet wird, und dass das Arretierungstell (18) In der Arretierungsstellung (IIIa) formschlüssig gehalten ist.

2. Verriegelungsvorrichtung (10) nach Anspruch 1,
**dadurch gekennzeichnet,**
**dass** das Arretierungsteil (18) direkt mit dem Sperrglied (15) oder Indirekt, Insbesondere über ein Steuerelement (17), welches das Sperrglied (15) betätigt, In der Arretierungsstellung (IIIa) mechanisch zusammenwirkt.

3. Verriegelungsvorrichtung (10) nach Anspruch 1 oder 2,
**dadurch gekennzeichnet,**
**dass** zumindest ein von außen teilweise zugängliches Bauelement (14) der Verriegelungsvorrichtung (10) vorhanden ist, welches derart mit dem Arretierungsteil (18) mechanisch zusammenwirkt, dass bei einem unberechtigten Entfernen des zugänglichen Bauelementes (14), das Arretierungstell (18) seine Arretierungsstellung (IIIa) einnimmt, um das Sperrgiled (15) In der Verriegelungsposition (la) zu halten.

4. Verriegelungsvorrichtung (10) nach Anspruch 3,
**dadurch gekennzeichnet,**
**dass** das von außen teilweise zugängliche Bauelement (14) einen Schließzylinder, ein Verschlussteil - insbesondere ein Gehäusedeckel oder eine Gehäusehälfte - oder einen elektrischen Anschlusskontakt oder dergleichen umfasst.

5. Verriegelungsvorrichtung (10) nach Anspruch 3 oder 4,
**dadurch gekennzeichnet,**
**dass** das von außen teilweise zugängliche Bauelement (14) zumindest über ein Sicherungsteil (21) mit dem Arretierungsteil (18) mechanisch zusammenwirkt,
wobei das zugängliche Bauelement (14) das Sicherungsteil (21) in einer Ruhelage (IIa) hält, sofern sich das zugängliche Bauelement (14) In seiner gebräuchsbedingten Anordnung befindet, und das Sicherungstell (21) in der Ruhelage (IIa) das Arretierungsteil (18) in einer Freigabestellung (IIIb) hält, in der das Sperrgiled (18) im Gehäuse (12) bewegbar angeordnet ist, und
wobei ein unberechtigtes Entfernen des von außen zugänglichen Bauelementes (14) dazu führt, dass das Sicherungstell (21) aus der Ruhelage (IIa) In eine Entsicherungslage (IIb) überführt wird, wodurch das Arretierungsteil (18) aus der Freigabestellung (IIIb) in die Arretierungsstellung (IIIa) wechselt, wodurch das Sperrgiled (15) in der Verriegelungsposition (Ia) arretiert ist.

6. Verriegelungsvorrichtung (10) nach Anspruch 5,
**dadurch gekennzeichnet**
**dass** das Sicherungsteil (21) an dem von außen teilweise zugänglichen Bauelement (14) fest angeordnet ist oder an bzw. In diesem integriert ist

7. Verriegelungsvorrichtung (10) nach Anspruch 5 oder 6.
**dadurch gekennzeichnet,**
**dass** das Sicherungsteil (21) als ein Sicherheltsblech oder ein Sicherheltsdraht ausgestaltet ist,

8. Verriegelungsvorrichtung (10) nach einem der vorhergehenden Ansprüche,
**dadurch gekennzeichnet,**
**dass** das Arretierungsteil (18) mit einer Feder (19, 22) beaufschlagt ist, wodurch ein Wechsel von der Freigabestellung (IIIb) in die Arretierungestellung (IIIa) erfolgt, falls die Verriegelungsvorrichtung (10) unberechtigt geöffnet wird.

9. Verriegelungsvorrichtung (10) nach Anspruch 8,
**dadurch gekennzeichnet,**
**dass** das Arretierungsteil (18) und die Feder (19), insbesondere In Form einer Schenkelfeder (22), einteilig und/oder materialeinheitlich ausgestaltet sind, wodurch ein selbstständiger Wechsel des kombinierten Arretierungsteils (18, 19), von der Freigabestellung (IIIb) in die Arretierungsstellung (IIIa) erreichbar ist.

10. Verriegelungsvorrichtung (10) nach Anspruch 9,
**dadurch gekennzeichnet,**
**dass** das kombinierte Arretierungsteil (18, 19) in der Arretierungsstellung (IIIa) formschlüssig durch einen Vorsprung (20.4) gehalten ist, wobei der Vorsprung (20.4) insbesondere einen Gleit- sowie einen Haltebereich (20.4a, b) aufweist.

11. Verriegelungsvorrichtung (10) nach Anspruch 9 oder 10,
**dadurch gekennzeichnet,**
**dass** das kombinierte Arretierungsteil (18, 19) zumindest zwei Schenkel aufweist, nämlich einen ersten und einen zweiten Schenkel (22.1, 22.2), wobei der zweite Schenkel (22.2) des kombinierten Arretierungsteils (18, 19) das Sperrglied (15) in der Verriegelungsposition (Ia) arretiert und der erste Schenkel (22.1) den zweiten Schenkel (22.2) des kombinierten Arretierungsteils (18, 19) formschlüssig In der Arretierungsstellung (IIIa) hält.

12. Verriegelungsvorrichtung (10) nach einem der vorhergehenden Ansprüche,
**dadurch gekennzeichnet,**
**dass** das Arretierungsteil (18) In der Arretierungsstellung (IIIa) formschlüssig mit einem Anschlagmittel (20,2) zusammenwirkt.

13. Verriegelungsvorrichtung (10) nach Anspruch 12,
**dadurch gekennzeichnet,**
**dass** das Arretierungsteil (18) beim Wechsel der Freigabestellung (IIIb) In die Arretierungsstellung (IIIa) hinter das Anschlagmittel (20.2) verschoben wird und mit einem Gegenenschlagmittel (18.4) des Arretierungstells (18) formschlüssig zusammenwirkt.

14. Verriegelungsvorrichtung (10) nach Anspruch 12 oder 13,
**dadurch gekennzeichnet,**
**dass** das Anschlagmittel (20.2) mit dem Gehäuse (12) verbunden ist oder ein Teil des Gehäuses (12) bildet.

15. Verriegelungsvorrichtung (10) nach einem der vorhergehenden Ansprüche,
**dadurch gekennzeichnet,**
**dass** das Arretierungsteil (18) In einem Lagerelement (20) verschleblich gehalten ist, wobei optional oder insbesondere ein Führungsbereich (20.1) vorgesehen ist.

16. Verriegelungsvorrichtung (10) nach einem der vorhergehenden Ansprüche,
**dadurch gekennzeichnet,**
**dass** das Arretierungsteil (18) In der Arretierungssteilung (IIIa) formschlüssig durch eine Feder (19), insbesondere einer Schenkelfeder (22), gehalten ist, wobei ein Teil (22.2) der Feder in dieser Stellung formschlüssig hinter einem Vorsprung (20.4) gehalten ist.

17. Verriegelungsvorrichtung (10) nach einem der vorhergehenden Ansprüche,
**dadurch gekennzeichnet,**
**dass** das Arretierungsteil (18) in der Arretierungsstellung (IIIa) durch wenigstens ein Restmittel (18.5), welches Insbesondere am Arretierungsteil (18) angeordnet ist, gehalten ist, und mit zumindest einem Gegenrestmittel (20,6) formschlüssig zusammenwirkt.

18. Verriegelungsvorrichtung (10) nach Anspruch 17,
**dadurch gekennzeichnet,**
**dass** die Rastmittel (18.5) als rampenförmige Vorsprünge ausgestaltet sind, die mit schuppenartigen Hinterschneidungen als Gegenrastmittel (20.5) formschlüssig zusammenwirken.

19. Verriegelungsvorrichtung (10) nach einem der Ansprüche 8 bis 18,
**dadurch gekennzeichnet,**
**dass** das Arretierungsteil (18) mittels der Federkraft (19) kippbar zu einer Bewegungsrichtung (20.10) zumindest im Bereich der Arretierungsposition (IIIa) ist.

20. Verriegelungsvorrichtung (10) nach Anspruch 19,
**dadurch gekennzeichnet,**
**dass** zumindest ein Teil der Federkraft (19) der Art am Arretierungsteil (18) angreift, um das Arretierungsteil (18) um eine Achse (20.8) vom Bewegungsfreiraum (20.7) zu kippen.

21. Verriegelungsvorrichtung (10) nach Anspruch 19 oder 20,
**dadurch gekennzeichnet,**
**dass** eine Schräge (20.9) an einem Ende des Bewegungsfreiraums (20.7) vom Arretierungsteil (18) angeordnet ist.

## Claims

1. A locking device (10) for the locking and/or unlocking of a component (11) essential for the function of a vehicle with
a casing (12), which more preferably serves for the fastening of the locking device (10) to the component (11) essential for the function, and
a moveable locking member (15), which can assume at least two positions, namely a locking position (Ia) in which the locking member (15) protrudes from the casing (12) through an opening (13) and is actively connected with the component (11) essential for the function, and
an unlocking position (Ib), in which the locking member (15) is not actively connected with the component (11) essential for the function, and
an arresting part (18), which in an arresting position (IIIa) arrests the locking member (15) in the locking position (Ia),
**characterized in that**
the arresting part (18) is only arresting the locking member (15) in the locking position (Ia)in the event that the locking device (10) is opened without authorisation,
the arresting part (18) is positively held in the arresting position (IIIa).

2. The locking device (10) according to claim 1,
**characterized in that**
the arresting part (18) mechanically interacts in the arresting position (IIIa) directly with the locking member (15) or indirectly, more preferably via a control element (17) which actuates the locking member (15).

3. The locking device (10) according to claim 1 or 2,
**characterized in that**
at least an element (14) partially accessible from the outside of the locking device (10) is present, which mechanically interacts with the arresting part (18) such that upon unauthorized removal of the accessible element (14) the arresting part (18) assumes its arresting position (IIIa) to hold the locking member (15) in the locking position (Ia).

4. The locking device (10) according to claim 3,
**characterized in that**
the element (14) partially accessible from the outside comprises a locking cylinder, a closing part - more preferably a casing lid or a casing half - or an electrical connection contact or such like.

5. The locking device (10) according to claim 3 or 4,
**characterized in that**
the element (14) partially accessible from the outside at least mechanically interacts with the arresting part (18) via a safety part (21),
wherein the accessible element (14) holds the safety part (21) in its position of rest (IIa), provided that the accessible element (14) is located in its arrangement conditional through its usage, and the safety part (21) in the position of rest (IIa) holds the arresting part (18) in a release position (IIIb), in which the locking member (15) is moveably arranged in the casing (12), and
wherein unauthorized removal of the element (14) accessible from the outside results **in that** the safety part (21) is transferred from the position of rest (IIa) to a safety-off position (IIb) as a result of which the arresting part (18) changes from the release position (IIIb) to the arresting position (IIIa), as a result of which the locking member (15) is arrested in the locking position (Ia).

6. The locking device (10) according to claim 5,
**characterized in that**
the safety part (21) is permanently arranged on or integrated on or in the element (14) partially accessible from the outside.

7. The locking device (10) according to claim 5 or 6,
**characterized in that**
the safety part (21) is developed as a safety plate or a safety wire.

8. The locking device (10) according to any one of the preceding claims,
**characterized in that**
the arresting part (18) is subjected to a spring force by a spring (19, 22), as a result of which a change from the release position (IIIb) to the arresting position (IIIa) takes place in the event that the locking device (10) is opened without authorisation.

9. The locking device (10) according to claim 8,
**characterized in that**
the arresting part (18) and of the spring (19), in particular of a leg spring (22), are formed as one piece and/or of the same material, as a result of which an independent change of the combined arresting part (18, 19) from the release position (IIIb) to the arresting position (IIIa) is achievable.

10. The locking device (10) according to Claim 9,
**characterized in that**
the combined arresting part (18, 19) is positively held in the arresting position (IIIa) through a protrusion (20.4), wherein the protrusion (20.4) more preferably comprises a sliding and a holding region (20.4a,b).

11. The locking device (10) according to Claim 9 or 10,
**characterized in that**
the combined arresting part (18, 19) comprises at least two legs, namely a first and a second leg (22.1, 22.2), wherein the second leg (22.2) of the combined arresting part (18, 19) arrests the locking member (15) in the locking position (Ia) and the first leg (22.1) positively holds the second leg (22.2) of the combined arresting part (18, 19) in the arresting position (IIIa).

12. The locking device (10) according to any one of the preceding claims,
**characterized in that**
the arresting part (18) in the arresting position (IIIa) positively interacts with a means of stopping (20.2).

13. The locking device (10) according to claim 12,
**characterized in that**
the arresting part (18) when changing from the release position (IIIb) to the arresting position (IIIa) is displaced behind the means of stopping (20.2) and positively interacts with a counter means of stopping (18.4) of the arresting part (18).

14. The locking device (10) according to claim 12 or 13,
**characterized in that**
the means of stopping (20.2) is connected with the casing (12) or forms a part of the casing (12).

15. The locking device (10) according to any one of the preceding claims,
**characterized in that**
the arresting part (18) is displaceably held in a bearing element (20), wherein optionally or more preferably a guide area (20.1) is provided.

16. The locking device (10) according to any one of the preceding claims,
**characterized in that**
the arresting part (18) is positively held in the arresting position (IIIa) through a spring (19), more preferably a leg spring (22), wherein a part (22.2) of the spring in this position is positively held behind a protrusion (20.4).

17. The locking device (10) according to any one of the preceding claims,
**characterized in that**
the arresting part (18) in the arresting position (IIIa) is held through at least a means of engagement (18.5), which is more preferably arranged on the arresting part (18), and positively interacts with at least a counter means of engagement (20.5).

18. The locking device (10) according to claim 17,
**characterized in that**
the means of engagement (18.5) are developed as ramp-shaped shoulders which positively interact with scale-type undercuts as counter means of engagement (20.5).

19. The locking device (10) according to any one of the claims 8 to 18,
**characterized in that**
the arresting part (18) by means of the spring force (19) is capable of being tilted to a direction of movement (20.10) at least in the region of the arresting position (IIIa).

20. The locking device (10) according to claim 19,
**characterized in that**
at least a part of the spring force (19) acts on the arresting part (18) in order to tilt the arresting part (18) around an axis (20.8) of the space of movement (20.7).

21. The locking device (10) according to claim 19 or 20,
**characterized in that**
a slope (20.9) is arranged at one end of the space of movement (20.7) of the arresting part (18).

## Revendications

1. Dispositif de verrouillage (10) dévolu au verrouillage et/ou au déverrouillage d'une pièce structurelle (11) fonctionnellement essentielle dans un véhicule, comprenant un boîtier (12) servant, en particulier, à la fixation dudit dispositif de verrouillage (10) à ladite pièce structurelle (11), et
un organe mobile de blocage (15) pouvant prendre au moins deux emplacements, à savoir
un emplacement de verrouillage (la) dans lequel l'organe de blocage (15) sort du boîtier (12) en empruntant un orifice (13), et est en liaison opérante avec la pièce structurelle (11), et
un emplacement de déverrouillage (Ib), dans lequel aucune liaison opérante n'est établie entre ledit organe de blocage (15) et ladite pièce structurelle (11), et
une pièce d'arrêt (18) qui, dans une position d'arrêt (IIIa), arrête ledit organe de blocage (15) à l'emplacement de verrouillage (la),
**caractérisé par le fait**
**que** la pièce d'arrêt (18) n'arrête l'organe de blocage (15), à l'emplacement de verrouillage (la), que lorsque le dispositif de verrouillage (10) est ouvert de manière non autorisée ; par le fait que ladite pièce d'arrêt (18) est retenue dans la position d'arrêt (IIIa) par complémentarité de formes.

2. Dispositif de verrouillage (10) selon la revendication 1,
**caractérisé par le fait**
**que** la pièce d'arrêt (18) coopère mécaniquement avec l'organe de blocage (15) dans la position d'arrêt (IIIa), directement, ou indirectement en particulier par l'intermédiaire d'un élément de commande (17) actionnant ledit organe de blocage (15).

3. Dispositif de verrouillage (10) selon la revendication 1 ou 2,
**caractérisé par**
la présence d'au moins un élément structurel (14) dudit dispositif de verrouillage (10), qui est partiellement accessible de l'extérieur et coopère mécaniquement avec la pièce d'arrêt (18) de façon telle que ladite pièce d'arrêt (18) prenne sa position d'arrêt (IIIa), lors d'un enlèvement non autorisé dudit élément structurel accessible (14), en vue de retenir ledit organe de blocage (15) à l'emplacement de verrouillage (Ia).

4. Dispositif de verrouillage (10) selon la revendication 3,
**caractérisé par le fait**
**que** l'élément structurel (14), partiellement accessible de l'extérieur, comprend un cylindre de fermeture, une partie d'obturation - notamment un couvercle de boîtier ou une moitié de boîtier - ou un contact de raccordement électrique, voire une pièce similaire.

5. Dispositif de verrouillage (10) selon la revendication 3 ou 4,
**caractérisé par le fait**
**que** l'élément structurel (14), partiellement accessible de l'extérieur, coopère mécaniquement avec la pièce d'arrêt (18), au moins par l'intermédiaire d'une pièce de sûreté (21),
sachant que ledit élément structurel accessible (14) retient ladite pièce de sûreté (21) dans une position de repos (IIa) dans la mesure où la disposition dudit élément structurel accessible (14) est conforme à son emploi, et que, dans ladite position de repos (IIa), ladite pièce de sûreté (21) retient ladite pièce d'arrêt (18) dans une position de libération (IIIb) dans laquelle l'organe de blocage (15) est logé avec mobilité dans le boîtier (12), et
sachant qu'un enlèvement non autorisé dudit élément structurel (14), accessible de l'extérieur, implique un transfert de ladite pièce de sûreté (21) de ladite position de repos (IIa) à une position (IIb) neutralisant la sûreté, de sorte que ladite pièce d'arrêt (18) passe de ladite position de libération (IIIb) à la position d'arrêt (IIIa), ledit organe de blocage (15) étant ainsi arrêté à l'emplacement de verrouillage (la).

6. Dispositif de verrouillage (10) selon la revendication 5,
**caractérisé par le fait**
**que** la pièce de sûreté (21) est implantée rigidement sur l'élément structurel (14) partiellement accessible de l'extérieur, ou est respectivement intégrée sur ou dans ce dernier.

7. Dispositif de verrouillage (10) selon la revendication 5 ou 6,
**caractérisé par le fait**
**que** la pièce de sûreté (21) est conçue sous la forme d'une tôle de sûreté ou d'un fil métallique de sûreté.

8. Dispositif de verrouillage (10) selon l'une des revendications précédentes,
**caractérisé par le fait**
**que** la pièce d'arrêt (18) est sollicitée par un ressort (19, 22), de sorte qu'un passage de la position de libération (IIIb) à la position d'arrêt (IIIa) s'opère dans le cas où ledit dispositif de verrouillage (10) est ouvert de manière non autorisée.

9. Dispositif de verrouillage (10) selon la revendication 8,
**caractérisé par le fait**
**que** la pièce d'arrêt (18) et le ressort (19), revêtant notamment la forme d'un ressort à branches (22), sont de réalisation monobloc et/ou matériellement unitaire permettant à la pièce d'arrêt combinée (18, 19) de passer, en mode autonome, de la position de libération (IIIb) à la position d'arrêt (IIIIa).

10. Dispositif de verrouillage (10) selon la revendication 9,
**caractérisé par le fait**
**que** la pièce d'arrêt combinée (18, 19) est retenue dans la position d'arrêt (IIIa) par complémentarité de formes, par l'intermédiaire d'une protubérance (20.4), ladite protubérance (20.4) étant notamment pourvue d'une zone de glissement, ainsi que d'une zone de retenue (20.4a, b).

11. Dispositif de verrouillage (10) selon la revendication 9 ou 10,
**caractérisé par le fait**
**que** la pièce d'arrêt combinée (18, 19) présente au moins deux branches, à savoir des première et seconde branches (22.1, 22.2), la seconde branche (22.2) de ladite pièce d'arrêt combinée (18, 19) arrêtant l'organe de blocage (15) à l'emplacement de verrouillage (la), et la première branche (22.1) retenant ladite seconde branche (22.2) de ladite pièce d'arrêt combinée (18, 19) dans la position d'arrêt (IIIa), par complémentarité de formes.

12. Dispositif de verrouillage (10) selon l'une des revendications précédentes,
**caractérisé par le fait**
**que** la pièce d'arrêt (18) coopère avec un moyen de butée (20.2) dans la position d'arrêt (IIIa), par complémentarité de formes.

13. Dispositif de verrouillage (10) selon la revendication 12,
**caractérisé par le fait**
**que**, lors du passage de la position de libération (IIIb) à la position d'arrêt (IIIIa), la pièce d'arrêt (18) est poussée derrière le moyen de butée (20.2) et coopère, par complémentarité de formes, avec un moyen de contre-butée (18.4) de ladite pièce d'arrêt (18).

14. Dispositif de verrouillage (10) selon la revendication 12 ou 13,
**caractérisé par le fait**
**que** le moyen de butée (20.2) est relié au boîtier (12), ou forme une partie dudit boîtier (12).

15. Dispositif de verrouillage (10) selon l'une des revendications précédentes,
**caractérisé par le fait**
**que** la pièce d'arrêt (18) est retenue de manière coulissante dans un élément de montage (20), une zone de guidage (20.1) étant prévue en option, ou en particulier.

16. Dispositif de verrouillage (10) selon l'une des revendications précédentes,
**caractérisé par le fait**
**que** la pièce d'arrêt (18) est retenue dans la position d'arrêt (IIIa) par complémentarité de formes, par l'intermédiaire d'un ressort (19) et notamment d'un ressort à branches (22), une partie (22.2) dudit ressort étant retenue derrière une protubérance (20.4) dans cette position, par complémentarité de formes.

17. Dispositif de verrouillage (10) selon l'une des revendications précédentes,
**caractérisé par le fait**
**que** la pièce d'arrêt (18) est retenue dans la position d'arrêt (IIIa) par l'intermédiaire d'au moins un moyen de crantage (18.5) notamment situé sur ladite pièce d'arrêt (18), et coopère, par complémentarité de formes, avec au moins un moyen de crantage complémentaire (20.5).

18. Dispositif de verrouillage (10) selon la revendication 17,
**caractérisé par le fait**
**que** les moyens de crantage (18.5) sont conçus comme des protubérances en forme de rampes coopérant, par complémentarité de formes, avec des contre-dépouilles du type écailles qui matérialisent des moyens de crantage complémentaires (20.5).

19. Dispositif de verrouillage (10) selon l'une des revendications 8 à 18,
**caractérisé par le fait**
**que** la pièce d'arrêt (18) peut basculer sous l'effet de la force du ressort (19), au moins dans la région de la position d'arrêt (IIIa), vis-à-vis d'une direction de mouvement (20.10).

20. Dispositif de verrouillage (10) selon la revendication 19,
**caractérisé par le fait**
**qu'**au moins une partie de la force du ressort (19) agit, sur la pièce d'arrêt (18), d'une manière propre à faire basculer ladite pièce d'arrêt (18), autour d'un axe (20.8), à partir de l'espace libre de mouvement (20.7).

21. Dispositif de verrouillage (10) selon la revendication 19 ou 20,
**caractérisé par le fait**
**qu'**un biseau (20.9) se trouve à une extrémité de l'espace libre de mouvement (20.7) de la pièce d'arrêt (18).
